# EUROPEAN PATENT APPLICATION

(11) **EP 1 610 100 A1**
(43) Date of publication of application: **28.12.2005**
(21) Application number: 05105504.4
(22) Date of filing: 21.06.2005
(51) Int. Cl.: G01F 1/00, F16K 37/00

(54) **Dosing faucet**

(30) Priority: 21.06.2004 FI 20045232
(71) Applicant: Serris Oy, 04400 Järvenpää (FI)
(72) Inventor: Kanervo, Seppo, 04400, Järvenpää (FI)
(74) Representative: LEITZINGER OY

(57) **Abstract**

The present invention relates to a dosing faucet (1), including a metering device (5) for dosed liquid. The metering device (5) includes: a volumetric rotor (50); first electronic circuit means (L, D, C), co-operating with the rotor (50) for generating an electric power required by the metering device (5); second electronic circuit means (L, 7, 8), co-operating with the rotor (50) for volumetric metering; and a display (9), which obtains its electric power from the first electronic circuit means (L, D, C) and its metering information from the second electronic circuit means (L, 7, 8), and which continues to display the measured dose volume after shutting off the dosing faucet (1).

## Description

The present invention relates to a dosing faucet, including a metering device for the liquid to be dosed.

At present there are metering faucets, for example water taps fitted in connection with kitchen sinks, from which the liquid can be dosed into a separate can, pot or the like. Often, when using this type of faucet, it is necessary to dose a specific amount of liquid through the faucet. At the moment, it is necessary to have a separate measuring vessel for pouring a specific amount of liquid therein.

At present, dosing faucets are available, which are also provided with a metering device. These include, for example, petrol stations' hoses and metering devices with their displays for defining the amount of petrol tapped. These are bulky and require separate electric power supply means for operation.

It is an object of the present invention to provide a simple and compact dosing element with an electronic display, which can be attached to a household or institutional catering kitchen faucet or some other water tap and which does not require any external power supply, and in which the measuring result remains on the display as the faucet is shut off.

According to the invention, the above object is achieved by a metering device, comprising:
- a volumetric rotor;
- first electronic circuit means, co-operating with the rotor for generating an electric power required by the device;
- second electronic circuit means, co-operating with the rotor for volumetric metering;
- a display, which obtains its electric power from the first electronic circuit means and its metering information from the second electronic circuit means, and which continues to display the measured dose volume after shutting off the dosing faucet.

Preferred embodiments of the present invention are set forth in the dependent claims.

The present invention will now be described in more detail with reference to the accompanying drawings, in which:
Fig. 1 shows a dosing faucet according to the invention in a side view, and
Fig. 2 shows schematically the structure of a metering instrument.

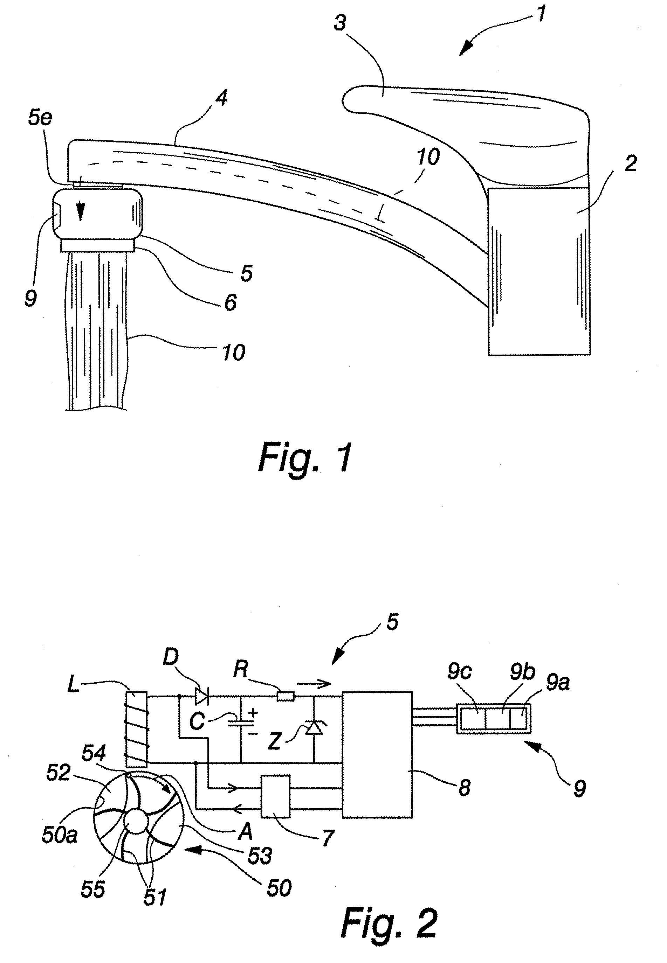

Fig. 1 illustrates a preferred embodiment for a dosing faucet of the present invention, which is indicated with reference numeral 1. The faucet includes a frame 2, having a valve (not shown) fitted at least partially inside its the wall for opening and closing a water flow channel. The valve is controlled with a manually operated hand-lever 3. In this case, the same operating lever 3 functions also as a mixer for cold and hot water. The frame 2 is also provided with an elongate water guide element 4, which is formed with a channel for guiding water 10 to an outlet opening made in the channel. The supply pressure of water 10 is normally established by the pressure of a water supply network to which the dosing faucet 1 is connected. Naturally, the faucet can be connected to any other separate supply system. Typically, the outlet opening is fitted with a strain 6, for example by means of a thread joint provided between the opening and strain 6.

Fig. 2 shows schematically the structure of a metering instrument 5. The metering instrument 5 preferably includes a volumetric rotor 50 disposed in a cylindrical housing. The rotor 50 includes a rotation shaft 55, which is provided with wings 51 extending in a substantially radial direction outward from the shaft 55. The outer ends of the wings 51 are in contact with the inner race 50a of the cylindrical housing and, thus, while rotating, are gliding along the surface of the race 50a. In this case, the number of wings 51 is five, whereby two adjacent wings 51 and the race 50a define therebetween a smaller dosing space or compartment for dosing therein the water 10 coming in at a pressure through an inlet opening 52 formed in the topside of the cylindrical housing. The dosing spaces are preferably equal in volume. In the present embodiment, for example, this volume can be 1/5 centilitre, whereby one centilitre of liquid passes through the metering equipment over a single rotor revolution. The shaft 55 is asymmetrically positioned in the cylinder housing, such that the volume limited by the wings 51 increases from the inlet opening 52 towards an outlet opening 53. Adapted to rotate along with the outer end of at least one wing 51 is disposed a magnet 54, the meaning of which will be discussed later.

The outlet opening 53 is preferably formed on the circumferentially opposite side with respect to the rotation axis in the lower part of the cylindrical housing. By virtue of the eccentric location of the shaft 55, the rotor 50 has such a structure that the rotor 50 and thereby the dosing chambers are set by pressurized water 10 in rotation in the direction of an arrow A. Thus, the water 10 fed into a single dosing chamber proceeds onto the circumferentially opposite side of the rotation shaft, the water 10 discharging by way of the outlet opening 53 located therein through the strain 6 and further out of the faucet 1. What is essential is that the inlet opening 52 and the outlet opening 53 are not at any time in a direct communication with each other.

The metering instrument 5 is further provided with first circuit means L, D and C, comprising at least a solenoid L, diode D, and a capacitor C. The first circuit means L, D and C are arranged to co-operate with the rotor 50, especially with the magnet 54 included therein, as follows.

The solenoid L is positioned in the metering instrument 5 in connection with the rotor 50, such that the magnet 54, rotating with the rotor 50, passes the solenoid L and is induces the solenoid L with an electric potential and current. The capacitor C is charged by the solenoid L via the diode D. The capacitor C functions as a current supply for a micro-circuit 8 in the metering instrument 5. In addition, the first circuit means may also include a zener diode Z, which limits the current supply's (capacitor C) potential appropriately, and a resistance R for providing an internal resistance for the current supply.

Furthermore, the metering instrument 5 is provided with second circuit means L, 7 and 8, comprising at least a solenoid L, a counter 7 and a micro-circuit 8. Thus, some of the first and second circuit means are constituted by common circuit means (at least solenoid L). A purpose of the Second circuit means is to count the number of electric potential pulses created by the magnet 54 for the solenoid L. At each rotation around its axis, the magnet 54 inducts a voltage and current into the solenoid L. Based on the change of voltage (pulse), the counter 7 works out the number of times that the magnet passes by the solenoid L, hence, in this case, the number of rotations run by the rotor 50 around its axis. Each change of voltage is reported from the counter 7 to the micro-circuit 8. As noted above, the flow though the metering instrument 5 is one centilitre of liquid over one revolution of the rotor 50. The micro-circuit 8 is used for transforming the number of voltage changes in real time to match the volume passed through the metering instrument 5 and for transmitting this information to a display 9.

The display 9 can be a three-digit display, wherein a first part 9a of the display is for centilitres, a second part 9b shows decilitres, and a third part 9c shows litres. Thus, the display 9 is adequate for displaying capacities of 999 centilitres, in practice 1000 centilitres (10 litres), at the accuracy of one centilitre. The display 9 is mounted on the side of the metering instrument 5 in a highly visible position.

In other advantageous embodiments, which require for example a higher flow, the compartments of the rotor 50 are made larger, for example one centilitre/compartment, and all wings 51 of the rotor 50 are provided with a magnet. Thus, five centilitres of liquid flows trough the metering instrument 5 over a single revolution (assuming that the number of compartments is five). If a higher accuracy is desired, the rotor 50 shall have its compartments made smaller, for example one millilitre/compartment. It is further beneficial that the micro-circuit 8 be provided with delay elements (not shown), which enable counting to be resumed after a certain delay time. Such a delay is needed for example when stopping the water flow, and thus the production of electricity, for checking a reading on the display 9. The delay is typically 2-5 seconds, but it can naturally be other than that, e.g. within the range of 1-10 seconds.

The display can be switched off after a fixed time or when the charge of the capacitor C has dropped to a certain level which will still ensure the availability of current for the micro-circuit 8 at the starting another metering process.

The metering instrument 5 can have a wired or wireless data exchange, for example to a computer or other separate data recorder.

The display 9 can also be positioned elsewhere than the metering equipment itself and the metering instrument 5 can be equipped with a transmitter circuit for sending measurement data typically in a wireless manner to a display, whereby the location and size of the display can be selected as appropriate.

## Claims

1. A dosing faucet (1), including a metering device (5) for liquid to be dosed, **characterized in that** the metering device (5) includes:
- a volumetric rotor (50);
- first electronic circuit means (L, D, C), co-operating with the rotor (50) for generating an electric power required by the metering device (5);
- second electronic circuit means (L, 7, 8), co-operating with the rotor (50) for volumetric metering;
- a display (9), which obtains its electric power from the first electronic circuit means (L, D, C) and its metering information from the second electronic circuit means (L, 7, 8), and which continues to display the measured dose volume after shutting off the dosing faucet (1).

2. A metering device (5) as set forth in claim 1, **characterized in that** the first electronic circuit means (L, D, C) comprise at least a solenoid (L), a diode (D) and a capacitor (C).

3. A metering device (5) as set forth in claim 1 or 2, **characterized in that** the second electronic circuit means (L, 7, 8) comprise at least a solenoid (L), a counter (7), and a micro-circuit (8).

4. A metering device (5) as set forth in any of the preceding claims 1 - 3, **characterized in that** the metering device (5) is positioned in connection with an outlet opening of the dosing faucet (1).

5. A metering device (5) as set forth in any of the preceding claims 1 - 4, **characterized in that** the metering device (5) comprises delay means, which enable continued metering after a delay time.

6. A metering device (5) as set forth in claim 5, **characterized in that** the delay time is preferably 1- 10 seconds, most preferably 3 - 5 seconds.

7. A metering device (5) as set forth in any of the preceding claims 1 - 6, **characterized in that** the rotor (50) is provided with a magnet (54), which induces a voltage into the first electronic circuit means (L, C, D) while rotating around a rotation axis.
